# EUROPEAN PATENT APPLICATION

(11) **EP 4 486 032 A1**
(43) Date of publication of application: **01.01.2025**
(21) Application number: 23784110.1
(22) Date of filing: 28.02.2023
(51) Int. Cl.: H04W 72/04

(54) **COMMUNICATION METHOD AND APPARATUS, AND STORAGE MEDIUM**

(30) Priority: 07.04.2022 CN 202210362103
(71) Applicant: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); HOU, Hailong, Shenzhen, Guangdong 518129 (CN); LI, Bingzhao, Shenzhen, Guangdong 518129 (CN)
(74) Representative: Körber, Martin Hans
(86) International application number: PCT/CN2023/078848
(87) International publication number: WO 2023/193546

(57) **Abstract**

This application discloses a communication method and apparatus, and a storage medium. The method includes: A network device sends first indication information to a first terminal; and the first terminal sends a system information request based on the first indication information, where the first indication information indicates to send the system information request based on first resource configuration information by using a Msg 1; or the first indication information indicates to send the system information request by using a Msg 3. According to the solution of this application, the first indication information explicitly indicates to transmit the system information request by using the Msg 1 or the Msg 3, so that reliability of obtaining system information by the first terminal is improved. In addition, when the first indication information indicates to send the system information request based on the first resource configuration information by using the Msg 1, the network device does not need to separately configure, for the first terminal, a resource for requesting other system information by using the Msg 1, and a resource configured by using the first resource configuration information can be reused, so that signaling overheads are reduced.

## Description

This application claims priority to Chinese Patent Application No. 202210362103.7, filed with the China National Intellectual Property Administration on April 7, 2022 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

Currently, in a new radio (new radio, NR) technology, a network device may configure, for a broadband terminal, a random access resource for sending a system information request (SI request) by using a message 1 (message 1, Msg 1), and the broadband terminal may send the system information request in the Msg 1.

However, for a narrowband terminal, the network device may not configure the random access resource for sending the system information request by using the Msg 1. Currently, there is no corresponding solution for the narrowband terminal to reliably obtain system information.

### SUMMARY

This application provides a communication method and apparatus, and a storage medium, to improve reliability of obtaining system information by a first terminal.

According to a first aspect, a communication method is provided, where the method includes: A first terminal receives first indication information from a network device; and the first terminal sends a system information request based on the first indication information, where the first indication information indicates to send the system information request based on first resource configuration information by using a first message Msg 1, and the first resource configuration information is resource configuration information for requesting other system information by using the Msg 1, or the first indication information indicates to send the system information request by using a third message Msg 3.

In this aspect, based on the indication information of the network device, the first terminal sends the system information request based on the first resource configuration information by using the Msg 1, or sends the system information request by using the Msg 3, so that reliability of obtaining system information by the first terminal is improved.

When the first indication information indicates to send the system information request based on the first resource configuration information by using the Msg 1, the network device does not need to separately configure, for the first terminal, a resource for requesting the other system information by using the Msg 1, and a resource configured by using the first resource configuration information can be reused, so that signaling overheads are reduced.

According to a second aspect, a communication method is provided, where the method includes: A network device sends first indication information; and the network device receives a system information request from a first terminal, where the first indication information indicates to send the system information request based on first resource configuration information by using a first message Msg 1, and the first resource configuration information is resource configuration information for requesting other system information by using the Msg 1, or the first indication information indicates to send the system information request by using a third message Msg 3.

In this aspect, the network device sends the first indication information to the first terminal, so that based on the first indication information of the network device, the first terminal may send the system information request based on the first resource configuration information by using the Msg 1, or send the system information request by using the Msg 3, and reliability of obtaining system information by the first terminal is improved.

According to a third aspect, a communication method is provided, where the method includes: A first terminal determines a first rule; and the first terminal sends a system information request according to the first rule, where the first rule is sending the system information request based on first resource configuration information by using a first message Msg 1, and the first resource configuration information is resource configuration information for requesting other system information by using the Msg 1, or the first rule is sending the system information request by using a third message Msg 3.

In this aspect, the first rule specifies that the first terminal sends the system information request to the network device based on the first resource configuration information by using the Msg 1 or sends the system information request to the network device by using the Msg 3, and the network device receives, according to the same first rule, the system information request sent by the first terminal. Therefore, the first terminal and the network device have consistent understanding, and reliability of obtaining system information by the first terminal is improved.

When the first rule is sending the system information request based on the first resource configuration information by using the Msg 1, the network device does not need to separately configure, for the first terminal, a resource for requesting the other system information by using the Msg 1, and a resource configured by using the first resource configuration information can be reused, so that signaling overheads are reduced.

According to a fourth aspect, a communication method is provided, where the method includes: A network device determines a first rule; and the network device receives a system information request from a first terminal according to the first rule, where the first rule is receiving the system information request based on first resource configuration information by using a first message Msg 1, and the first resource configuration information is resource configuration information for requesting other system information by using the Msg 1, or the first rule is receiving the system information request by using a third message Msg 3.

In this aspect, the first rule specifies that the network device receives, based on the first resource configuration information by using the Msg 1, the system information request sent by the first terminal, or receives, by using the Msg 3, the system information request sent by the first terminal. Therefore, the network device and the first terminal have consistent understanding, and reliability of obtaining system information by the first terminal is improved.

When the first rule is sending the system information request based on the first resource configuration information by using the Msg 1, the network device does not need to separately configure, for the first terminal, a resource for requesting the other system information by using the Msg 1, and a resource configured by using the first resource configuration information can be reused, so that signaling overheads are reduced.

According to a fifth aspect, a communication method is provided, where the method includes: A first terminal receives a first system information block, where the first system information block includes first resource configuration information; and when a size of a first frequency domain resource is less than or equal to a channel bandwidth supported by the first terminal, where the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, the first terminal sends a system information request based on the first resource configuration information by using the Msg 1; or when the size of the first frequency domain resource is greater than the channel bandwidth supported by the first terminal, where the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, the first terminal sends the system information request by using a third message Msg 3.

In this aspect, the first terminal determines to send the system information request by using the Msg 1 or the Msg 3 based on a relationship between the size of the first frequency domain resource configured by the network device for a second terminal and the channel bandwidth supported by the first terminal, or a relationship between the bandwidth of the first initial bandwidth part (bandwidth part, BWP) and the channel bandwidth supported by the first terminal, so that reliability of obtaining system information by the first terminal is improved. Especially, when the network device does not configure, for the first terminal, resource configuration information for requesting the other system information by using the Msg 1, the first terminal can determine a resource of a system information request message.

The network device does not need to separately configure, for the first terminal, a resource for requesting the other system information by using the Msg 1, and the first resource configuration information can be reused, so that signaling overheads are reduced.

According to a sixth aspect, a communication method is provided, where the method includes: A network device sends a first system information block, where the first system information block includes first resource configuration information; and when a size of a first frequency domain resource is less than or equal to a channel bandwidth supported by a first terminal, where the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, the network device receives a system information request sent by the first terminal based on the first resource configuration information by using the Msg 1; or when the size of the first frequency domain resource is greater than the channel bandwidth supported by the first terminal, where the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, the network device receives the system information request sent by the first terminal by using a third message Msg 3.

In this aspect, the network device does not need to separately configure, for the first terminal, a resource for requesting the other system information by using the Msg 1, and the first resource configuration information can be reused, so that signaling overheads are reduced.

According to a seventh aspect, a communication apparatus is provided. The communication apparatus may implement the method in the first aspect. For example, the communication apparatus may be a chip or a first terminal. The foregoing method may be implemented by using software, hardware, or by executing corresponding software by hardware.

In a possible implementation, the apparatus includes a transceiver unit, and may further include a processing unit. The transceiver unit is configured to receive first indication information from a network device; and the transceiver unit is further configured to send a system information request based on the first indication information, where the first indication information indicates to send the system information request based on first resource configuration information by using a first message Msg 1, and the first resource configuration information is resource configuration information for requesting other system information by using the Msg 1; or the first indication information indicates to send the system information request by using a third message Msg 3.

The communication apparatus may be configured to perform the method in the first aspect and the possible implementations of the first aspect.

According to an eighth aspect, a communication apparatus is provided. The communication apparatus may implement the method in the second aspect. For example, the communication apparatus may be a chip or a network device. The foregoing method may be implemented by using software, hardware, or by executing corresponding software by hardware.

In a possible implementation, the apparatus includes a transceiver unit, and may further include a processing unit. The transceiver unit is configured to send first indication information; and the transceiver unit is further configured to receive a system information request from a first terminal, where the first indication information indicates to send the system information request based on first resource configuration information by using a first message Msg 1, and the first resource configuration information is resource configuration information for requesting other system information by using the Msg 1; or the first indication information indicates to send the system information request by using a third message Msg 3.

The communication apparatus may be configured to perform the method in the second aspect and the possible implementations of the second aspect.

According to a ninth aspect, a communication apparatus is provided. The communication apparatus may implement the method in the third aspect. For example, the communication apparatus may be a chip or a first terminal. The foregoing method may be implemented by using software, hardware, or by executing corresponding software by hardware.

In a possible implementation, the apparatus includes a processing unit and a transceiver unit. The processing unit is configured to determine a first rule; and the transceiver unit is configured to send a system information request according to the first rule, where the first rule is sending the system information request based on first resource configuration information by using a first message Msg 1, and the first resource configuration information is resource configuration information for requesting other system information by using the Msg 1; or the first rule is sending the system information request by using a third message Msg 3.

The communication apparatus may be configured to perform the method in the third aspect and the possible implementations of the third aspect.

According to a tenth aspect, a communication apparatus is provided. The communication apparatus may implement the method in the fourth aspect. For example, the communication apparatus may be a chip or a network device. The foregoing method may be implemented by using software, hardware, or by executing corresponding software by hardware.

In a possible implementation, the apparatus includes a processing unit and a transceiver unit. The processing unit is configured to determine a first rule; and the transceiver unit is configured to receive a system information request from a first terminal according to the first rule, where the first rule is receiving the system information request based on first resource configuration information by using a first message Msg 1, and the first resource configuration information is resource configuration information for requesting other system information by using the Msg 1, or the first rule is receiving the system information request by using a third message Msg 3.

The communication apparatus may be configured to perform the method in the fourth aspect and the possible implementations of the fourth aspect.

According to an eleventh aspect, a communication apparatus is provided. The communication apparatus may implement the method in the fifth aspect. For example, the communication apparatus may be a chip or a first terminal. The foregoing method may be implemented by using software, hardware, or by executing corresponding software by hardware.

In a possible implementation, the apparatus includes a transceiver unit, and may further include a processing unit. The transceiver unit is configured to receive a first system information block, where the first system information block includes first resource configuration information; and the transceiver unit is further configured to: when a size of a first frequency domain resource is less than or equal to a channel bandwidth supported by the first terminal, where the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, send a system information request based on the first resource configuration information by using the Msg 1; or the transceiver unit is further configured to: when the size of the first frequency domain resource is greater than the channel bandwidth supported by the first terminal, where the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, send the system information request by using a third message Msg 3.

The communication apparatus may be configured to perform the method in the fifth aspect and the possible implementations of the fifth aspect.

According to a twelfth aspect, a communication apparatus is provided. The communication apparatus may implement the method in the sixth aspect. For example, the communication apparatus may be a chip or a network device. The foregoing method may be implemented by using software, hardware, or by executing corresponding software by hardware.

In a possible implementation, the apparatus includes a transceiver unit, and may further include a processing unit. The transceiver unit is configured to send a first system information block, where the first system information block includes first resource configuration information; and the transceiver unit is further configured to: when a size of a first frequency domain resource is less than or equal to a channel bandwidth supported by a first terminal, where the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, receive a system information request sent by the first terminal based on the first resource configuration information by using the Msg 1; or the transceiver unit is further configured to: when the size of the first frequency domain resource is greater than the channel bandwidth supported by the first terminal, where the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, receive the system information request sent by the first terminal by using a third message Msg 3.

The communication apparatus may be configured to perform the method in the sixth aspect and the possible implementations of the sixth aspect.

In another possible implementation, the communication apparatus according to any one of the seventh aspect to the twelfth aspect includes a processor coupled to a memory, and the processor is configured to support the apparatus in performing a corresponding function in the foregoing communication method. The memory is configured to be coupled to the processor, and the memory stores a computer program (or computer-executable instructions) and/or data necessary for the apparatus. Optionally, the communication apparatus may further include a communication interface, configured to support communication between the apparatus and another network element, for example, sending or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

In another possible implementation, the communication apparatus according to any one of the seventh aspect to the twelfth aspect includes a processor and a transceiver apparatus, the processor is coupled to the transceiver apparatus, and the processor is configured to execute a computer program or instructions to control the transceiver apparatus to receive and send information; and when the processor executes the computer program or the instructions, the processor is further configured to implement the foregoing method by using a logic circuit or by executing code instructions. The transceiver apparatus may be a transceiver, a transceiver circuit, an interface circuit, or an input/output interface, and is configured to: receive a signal from another communication apparatus other than the communication apparatus and transmit the signal to the processor, or send a signal from the processor to another communication apparatus other than the communication apparatus. When the communication apparatus is the chip, the transceiver apparatus is the transceiver circuit or the input/output interface.

When the communication apparatus according to any one of the seventh aspect to the twelfth aspect is the chip, a sending unit may be an output unit, for example, an output circuit or the communication interface; and a receiving unit may be an input unit, for example, an input circuit or the communication interface. When the communication apparatus is a terminal, the sending unit may be a transmitter or a transmitter machine; and the receiving unit may be a receiver or a receiver machine.

With reference to any one of the first aspect to the twelfth aspect, in a possible implementation, the first resource configuration information is carried in the first system information block.

With reference to any one of the first aspect to the twelfth aspect, in another possible implementation, the first system information block does not include second resource configuration information, and the second resource configuration information is resource configuration information used by the first terminal to request other system information by using the Msg 1. In this implementation, the first system information block sent by the network device does not include the second resource configuration information. In another implementation, a protocol may specify that a resource for requesting the other system information by using the Msg 1 is not configured for the first terminal.

With reference to any one of the first aspect to the twelfth aspect, in another possible implementation, the first resource configuration information is resource configuration information used by a second terminal to request other system information by using the Msg 1, where the second terminal is a broadband terminal.

With reference to any one of the first aspect to the twelfth aspect, in another possible implementation, the first terminal is a narrowband terminal.

According to a thirteenth aspect, a communication system is provided, and the communication system includes the communication apparatus according to the seventh aspect and the communication apparatus according to the eighth aspect, includes the communication apparatus according to the ninth aspect and the communication apparatus according to the tenth aspect, or includes the communication apparatus according to the eleventh aspect and the communication apparatus according to the twelfth aspect.

According to a fourteenth aspect, a computer-readable storage medium is provided, and the computer-readable storage medium stores a computer program or instructions. When the program or the instructions are executed by a processor, the method according to any one of the first aspect to the sixth aspect or the implementations of the first aspect to the sixth aspect is performed.

According to a fifteenth aspect, a computer program product is provided. When the computer program product is executed on a computing device, the method according to any one of the first aspect to the sixth aspect or the implementations of the first aspect to the sixth aspect is performed.

According to a sixteenth aspect, a circuit is provided. The circuit is coupled to a memory, and the circuit is configured to perform the method according to any one of the first aspect to the sixth aspect or the implementations of the first aspect to the sixth aspect. The circuit may include a chip circuit.

### BRIEF DESCRIPTION OF DRAWINGS

FIG. 1 is a diagram of an architecture of a communication system 1000 used in an embodiment of this application;
FIG. 2 is a schematic flowchart of sending a system information request by an NR terminal by using a Msg 1 according to an embodiment of this application;
FIG. 3 is a schematic flowchart of sending a system information request by an NR terminal by using a Msg 3 according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes embodiments of this application with reference to the accompanying drawings in embodiments of this application.

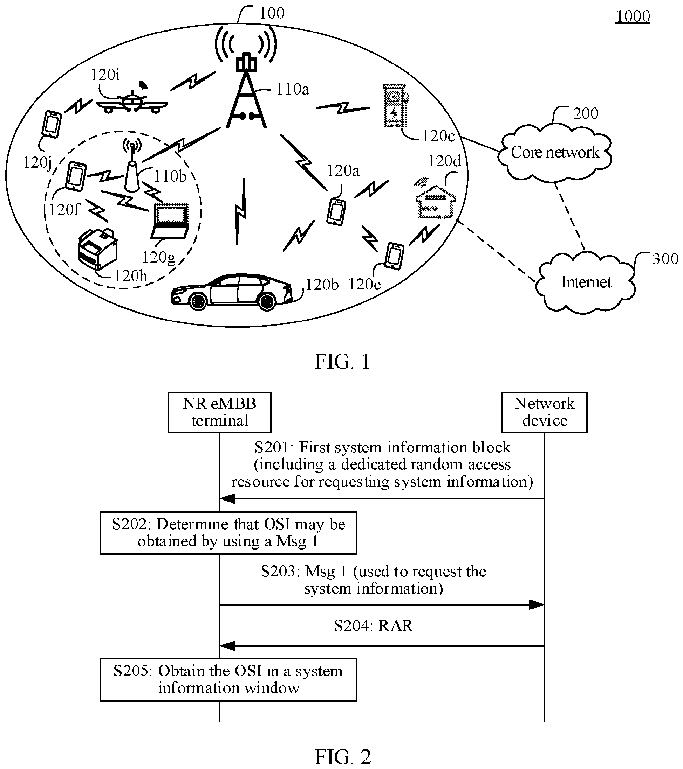

FIG. 1 is a diagram of an architecture of a communication system 1000 used in an embodiment of this application. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent different physical devices, or a function of the core network device and a logical function of the radio access network device may be integrated into a same physical device, or a part of functions of the core network device and a part of functions of the radio access network device may be integrated into a physical device. The terminals may be connected to each other and the radio access network devices may be connected to each other in a wired or wireless manner. FIG. 1 is only a diagram. The communication system may further include another network device, for example, may further include a wireless relay device and a wireless backhaul device. The wireless relay device and the wireless backhaul device are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or a unit that implements some functions of the base station, for example, may be a central unit (central unit, CU), or may be a distributed unit (distributed unit, DU). The radio access network device may be a macro base station (for example, 110a in FIG. 1), may be a micro base station or an indoor station (for example, 110b in FIG. 1), or may be a relay node, a donor node, or the like. A specific technology and a specific device form used by the radio access network device are not limited in embodiments of this application. For ease of description, the base station is used as an example of the radio access network device below for description.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, a drone, a helicopter, an airplane, a ship, a robot, a robotic arm, a smart home device, or the like. A specific technology and a specific device form used by the terminal are not limited in embodiments of this application.

The base station and the terminal may be fixed or movable. The base station and the terminal may be deployed on land, including indoor or outdoor, handheld or vehicle-mounted; may be deployed on a water surface; or may be deployed on an airplane, a balloon, or a satellite in the air. Application scenarios of the base station and the terminal are not limited in embodiments of this application.

In embodiments of this application, a function of the base station may alternatively be performed by a module (for example, a chip) in the base station, or may be performed by a control subsystem that includes the function of the base station. The control subsystem that includes the function of the base station herein may be a control center in the foregoing application scenarios such as a smart grid, industrial control, intelligent transportation, and a smart city. A function of the terminal may alternatively be performed by a module (for example, a chip or a modem) in the terminal, or may be performed by an apparatus that includes the function of the terminal.

A terminal device in this application may be a first-type terminal device or a second-type terminal device, and the first-type terminal device and the second-type terminal device may have at least one of the following distinguishing features.
1. Bandwidth capabilities are different. For example, a channel bandwidth supported by the first-type terminal device is less than a channel bandwidth supported by the second-type terminal device, or a maximum bandwidth supported by the first-type terminal device is less than a maximum bandwidth supported by the second-type terminal device.
2. Quantities of transmit-receive antennas are different. For example, a quantity of transmit-receive antennas supported by the first-type terminal device is less than a quantity of transmit-receive antennas supported by the second-type terminal device.
3. Maximum uplink transmit power is different. For example, maximum uplink transmit power supported by the first-type terminal device is less than maximum uplink transmit power supported by the second-type terminal device.
4. Protocol versions are different. For example, the first-type terminal device may be a terminal device in NR release-17 (release-17, Rel-17) or a release later than the NR Rel-17. The second-type terminal device may be, for example, a terminal device in NR release-15 (release-15, Rel-15) or NR release-16 (release-16, Rel-16). The second-type terminal device may also be referred to as an NR legacy (NR legacy) terminal device.
5. Data processing capabilities are different. For example, a minimum delay between receiving downlink data and sending a feedback for the downlink data by the first-type terminal device is greater than a minimum delay between receiving downlink data and sending a feedback for the downlink data by the second-type terminal device; and/or a minimum delay between sending uplink data and receiving a feedback for the uplink data by the first-type terminal device is greater than a minimum delay between sending uplink data and receiving a feedback for the uplink data by the second-type terminal device.
6. Supported carrier aggregation (carrier aggregation, CA) capabilities are different. For example, the second-type terminal device may support carrier aggregation, but the first-type terminal device does not support carrier aggregation. For another example, both the second-type terminal device and the first-type terminal device support carrier aggregation, but a maximum quantity of aggregated carriers supported by the second-type terminal device is greater than a maximum quantity of aggregated carriers supported by the first-type terminal device. For example, the second-type terminal device may support aggregation of a maximum of five carriers or 32 carriers, but the first-type terminal device supports aggregation of a maximum of two carriers at the same time.
7. Communication modes are different. For example, the second-type terminal device supports full-duplex frequency division duplex (frequency division duplex, FDD), but the first-type terminal device supports only half-duplex FDD.
8. Processing capabilities are different. A processing capability of the first-type terminal device is less than a processing capability of the second-type terminal device.

The second-type terminal device and the first-type terminal device have but are not limited to the foregoing distinguishing features.

In a possible implementation, the first-type terminal device may be a reduced capability (reduced capability, RedCap) terminal device, or the first-type terminal device may be a low capability terminal device, a reduced capability terminal device, REDCAP UE, reduced capacity UE, a narrowband NR (narrow-band NR, NB-NR) UE, or the like. The second-type terminal device may be a terminal device with a legacy capability, a normal capability, or a high capability, and may also be referred to as a legacy (legacy) terminal device or a normal (normal) terminal device.

A first terminal in this application may be the foregoing first-type terminal device, and a second terminal in this application may be the foregoing second-type terminal device.

The network device in embodiments may be the radio access network device in FIG. 1.

This application relates to requesting system information based on a legacy random access process. The legacy random access process includes four-step random access (4-step RACH) and two-step random access (2-step RACH).

A four-step random access process includes transmission of the following messages: a first message, a second message, a third message, and a fourth message.

The first message is also referred to as a message 1 (Msg 1), a random access request, a random access preamble (RACH preamble), or a preamble (preamble). In an existing random access process, the first message is used to request random access. In this embodiment of this application, the first message may be further used to request the system information. The network device broadcasts an available random access resource to all terminal devices within a coverage range by using the system information. A terminal device in an uplink out-of-synchronization state may select a random access preamble, and send the selected random access preamble on a random access physical channel indicated by the network device.

The second message is also referred to as a message 2 (Msg 2) or a random access response (random access response, RAR). The second message is a response to the first message. The second message includes at least one of the following information: an uplink grant (UL grant), a temporary-cell radio network temporary identifier (temporary-cell random access-radio network temporary identity, T-CRNTI), a random access preamble identifier (random access preamble identifier, RAPID), and a timing advance (timing advance, TA). Downlink control information (downlink control information, DCI) for scheduling the second message is scrambled by using a random access-radio network temporary identifier (random access-radio network temporary identity, RA_RNTI).

The third message is also referred to as a message 3 (Msg 3). The third message is the third message used when the terminal performs access by using four-step RACH, and the message may be a radio resource control (radio resource control, RRC) connection request, an RRC connection resume request, an RRC system message request, an RRC connection reestablishment request, or the like. Because different terminal devices may select a same physical channel to send a same random access preamble, the network device cannot distinguish between different terminal devices, and the terminal devices send the Msg 3 to the network device. The Msg 3 includes a terminal device identifier (UE-ID) and some specific data.

The fourth message is also referred to as a message 4 (Msg 4) or a conflict resolution message. The fourth message is a response to the third message. The fourth message may include a user equipment contention resolution identifier (UE contention resolution identity). After receiving the message 3, the network device selects a terminal device that is successfully decoded, and sends the Msg 4 to the terminal device.

Two-step random access includes transmission of the following messages: a message A and a message B.

The message A (Msg A) may be divided into two parts: an RA preamble and a physical uplink shared channel payload (PUSCH payload), which respectively correspond to the Msg 1 and the Msg 3 in four-step random access. This may be understood as that when receiving a two-step random access configuration, the terminal may not only obtain related information about sending the preamble on a PRACH channel, but also obtain a grant related to sending of the preamble, and send, on a PUSCH, content that originally needs to be sent in the Msg 3. Therefore, in a two-step random access scenario, the network device needs to parse both the preamble sent by the terminal and grant content associated with the preamble, and then perform contention resolution determining. The message B (Msg B) includes the Msg 2 and the Msg 4 in four-step random access.

In an NR technology, an NR eMBB terminal may request required other system information (other system information, OSI) based on a requirement. The OSI is system information other than a SIB 1. If the network device configures a dedicated random access resource for the NR eMBB terminal, the NR eMBB terminal may send a system information request (SI request) by using the Msg 1 (that is, in a non-contention-based random access manner), to request the OSI, and a procedure is shown in FIG. 1; or if the network device does not configure a dedicated random access resource for the NR eMBB terminal, the NR eMBB terminal may send an RRC system information request in the Msg 3, and a procedure is shown in FIG. 2.

FIG. 2 is a schematic flowchart of sending a system information request by an NR eMBB terminal by using a Msg 1 according to an embodiment of this application. For example, this procedure may include the following steps.

S201: A network device sends a first system information block (system information block 1, SIB 1).

In this embodiment, the network device configures, for the NR eMBB terminal, a dedicated random access resource for requesting system information by using the Msg 1. For example, if a system information-scheduling information (si-SchedulingInfo) field in the SIB 1 includes system information-request configuration (si-RequestConfig) or system information-request configuration supplementary uplink (si-RequestConfigSUL), it indicates that the NR eMBB terminal may obtain OSI by using the Msg 1.

S202: After the NR eMBB terminal receives the SIB 1, if the si-SchedulingInfo field in the SIB 1 includes si-RequestConfig or si-RequestConfigSUL, the NR eMBB terminal determines that the OSI may be obtained by using the Msg 1.

After receiving the SIB 1, the NR eMBB terminal parses the si-SchedulingInfo field in the SIB 1. If the si-SchedulingInfo field in the SIB 1 includes si-RequestConfig or si-RequestConfigSUL, it indicates that the NR eMBB terminal may obtain the OSI by using the Msg 1.

S203: The NR eMBB terminal sends the Msg 1 to the network device, where the Msg 1 is used to request the system information.

After the NR eMBB terminal determines that the OSI may be obtained by using the Msg 1, the NR eMBB terminal sends the Msg 1 to the network device based on the foregoing resource configuration, and the Msg 1 is used to request the system information.

S204: After receiving the Msg 1 sent by the NR eMBB terminal, the network device sends a RAR to the NR eMBB terminal.

Correspondingly, the NR eMBB terminal receives the RAR, and determines that the network device receives the system information request.

S205: After receiving the RAR, the NR eMBB terminal obtains the OSI in a system information window (SI-window).

After sending the RAR, the network device sends, in the system information window to the NR eMBB terminal, one or more pieces of OSI requested by the NR eMBB terminal. The NR eMBB terminal obtains the one or more pieces of OSI in the system information window.

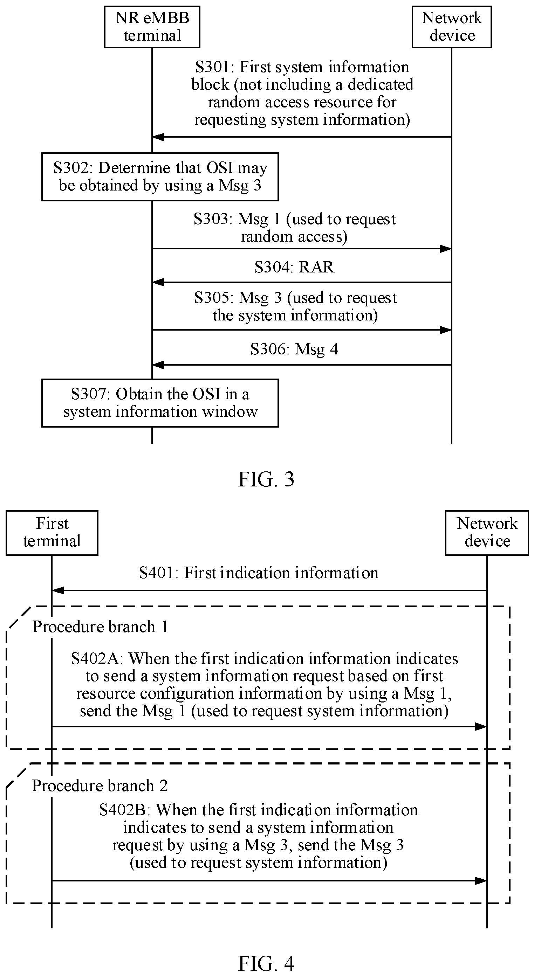

FIG. 3 is a schematic flowchart of sending a system information request by an NR eMBB terminal by using a Msg 3 according to an embodiment of this application. For example, this procedure may include the following steps.

S301: A network device sends a SIB 1.

In this embodiment, the network device does not configure, for the NR eMBB terminal, a dedicated random access resource for requesting system information by using a Msg 1. For example, a si-SchedulingInfo field in the SIB 1 does not include si-RequestConfig or si-RequestConfigSUL.

S302: After the NR eMBB terminal receives the SIB 1, if the si-SchedulingInfo field in the SIB 1 does not include si-RequestConfig or si-RequestConfigSUL, the NR eMBB terminal determines to obtain OSI by using the Msg 3.

After receiving the SIB 1, the NR eMBB terminal parses the si-SchedulingInfo field in the SIB 1. If the si-SchedulingInfo field in the SIB 1 does not include si-RequestConfig or si-RequestConfigSUL, the NR eMBB terminal determines to obtain the OSI by using the Msg 3.

S303: The NR eMBB terminal sends the Msg 1 to the network device.

The Msg 1 may be used to request random access. Refer to a meaning of the Msg 1 in an existing random access process.

S304: After receiving the Msg 1 sent by the NR eMBB terminal, the network device sends a RAR to the NR eMBB terminal.

The RAR is used to respond to the Msg 1, that is, a random access request.

S305: The NR eMBB terminal sends the Msg 3 to the network device, to request the OSI.

The NR eMBB terminal sends the Msg 3 to the network device, to indicate the network device to deliver the OSI requested by the NR eMBB terminal to the NR eMBB terminal.

S306: After receiving the Msg 3 sent by the NR eMBB terminal, the network device sends a Msg 4 to the NR eMBB terminal.

The NR eMBB terminal receives the Msg 4. The Msg 4 includes a user equipment contention resolution identifier. If the NR eMBB terminal can obtain the user equipment contention resolution identifier through parsing, and the user equipment contention resolution identifier is the same as first 48 bits of the Msg 3, it indicates that access performed by the NR eMBB terminal succeeds. Then, the NR eMBB terminal may continue a subsequent operation. For example, the NR eMBB terminal monitors and receives the OSI in a system information window.

S307: After receiving the Msg 4, the NR eMBB terminal obtains the OSI in the system information window.

After receiving the Msg 3, the network device sends, in the system information window to the NR eMBB terminal, one or more pieces of OSI requested by the NR eMBB terminal. The NR eMBB terminal obtains the one or more pieces of OSI in the system information window.

This application provides a communication solution. Based on indication information of the network device, a first terminal sends the system information request based on first resource configuration information by using the Msg 1, or sends the system information request by using the Msg 3, so that reliability of obtaining the system information by the first terminal is improved.

FIG. 4 is a schematic flowchart of a communication method according to an embodiment of this application. For example, the method may include the following steps.

S401: A network device sends first indication information to a first terminal.

Correspondingly, the first terminal receives the first indication information from the network device.

Specifically, when accessing a system, the first terminal receives a synchronization signal from the network device. After synchronization is performed based on the synchronization signal, the network device may send the first indication information to the first terminal, to indicate how the first terminal requests OSI.

For example, if the network device does not configure, for the first terminal, a resource for requesting the OSI by using a Msg 1, or a protocol specifies that a resource for requesting the OSI by using a Msg 1 is not configured for the first terminal, the network device may send the first indication information to the first terminal, to indicate how the first terminal requests the OSI.

The first indication information indicates to send a system information request based on first resource configuration information by using the Msg 1, and the first resource configuration information is resource configuration information used by the terminal to send the Msg 1 to request the OSI. In other words, the first indication information indicates that the first terminal can reuse the first resource configuration information, or the first indication information indicates to send the Msg 1 on a resource configured by using the first resource configuration information, to request system information. For example, the first resource configuration information is resource configuration information that is configured by the network device for another terminal (for example, a second terminal) and that is dedicated to requesting the system information, and is resource configuration information used by another terminal to request the OSI by using the Msg 1. Sending the system information request by using the Msg 1 may be understood as sending the Msg 1 to request the OSI.

Alternatively, the first indication information indicates to send the system information request by using a Msg 3. Sending the system information request by using the Msg 3 may be understood as sending the Msg 3 to request the OSI.

For example, the first indication information may be a field in a message. The field indicates to send the system information request by using the Msg 1 or the Msg 3.

For example, the first indication information may alternatively be indicated by using a preset bit. For example, the first indication information may be indicated by using one bit. When a value of the bit is "1", it indicates that the system information request is to be sent based on the first resource configuration information by using the Msg 1; or when a value of the bit is "0", it indicates that the system information request is to be sent by using the Msg 3. Alternatively, when a value of the bit is "0", it indicates that the system information request is to be sent based on the first resource configuration information by using the Msg 1; or when a value of the bit is "1", it indicates that the system information request is to be sent by using the Msg 3.

For example, alternatively, if the first indication information exists, to be specific, if the first terminal receives the first indication information sent by the network device, it indicates that the system information request is to be sent based on the first resource configuration information by using the Msg 1; or if the first indication information does not exist, to be specific, if the first terminal does not receive the first indication information, the first terminal sends the system information request by using the Msg 3.

After receiving the first indication information, the first terminal chooses, based on content of the first indication information, to perform one of the following procedure branch 1 or procedure branch 2.

### Procedure branch 1:

S402A: When the first indication information indicates to send the system information request based on the first resource configuration information by using the Msg 1, the first terminal sends the Msg 1 to the network device based on the first indication information, where the Msg 1 is used to request the system information.

In other words, the first terminal sends the system information request (SI request) by using the Msg 1. In specific implementation, the first terminal sends the Msg 1 by using the resource configured by using the first resource configuration information.

### Procedure branch 2:

S402B: When the first indication information indicates to send the system information request by using the Msg 3, the first terminal sends the Msg 3 to the network device based on the first indication information, where the Msg 3 is used to request the system information.

In other words, the first terminal sends the system information request by using the Msg 3.

In a possible implementation, the first indication information is indicated in an implicit manner. To be specific, a field may be predefined, and a manner of requesting the OSI is determined by determining whether the field exists in a specific field. If the field exists, it indicates that the first indication information is that the first terminal requests the system information by using the Msg 1; or if the field does not exist, it indicates that the first indication information is that the first terminal requests a system message by using the Msg 3. In other words, an RRC message for requesting the system message is sent in the Msg 3.

When the first terminal determines to request the system information by using the Msg 3, the first terminal may further send the Msg 3 by using a RACH resource configured by the network device for the second terminal, or may send the Msg 3 by using a RACH resource configured by the network device for the first terminal. Specifically, the first terminal may select a resource to be used, or the network device may further send indication information, to indicate the first terminal to send the Msg 3 by using a first RACH resource or send a Msg 3 request on a second RACH resource.

According to the communication method provided in this embodiment of this application, based on the indication information of the network device, the first terminal sends the system information request based on the first resource configuration information by using the Msg 1, or sends the system information request by using the Msg 3, so that reliability of obtaining the system information by the first terminal is improved.

When the first indication information indicates to send the system information request based on the first resource configuration information by using the Msg 1, the network device does not need to separately configure, for the first terminal, a resource for requesting other system information by using the Msg 1, and the resource configured by using the first resource configuration information can be reused, so that signaling overheads are reduced.

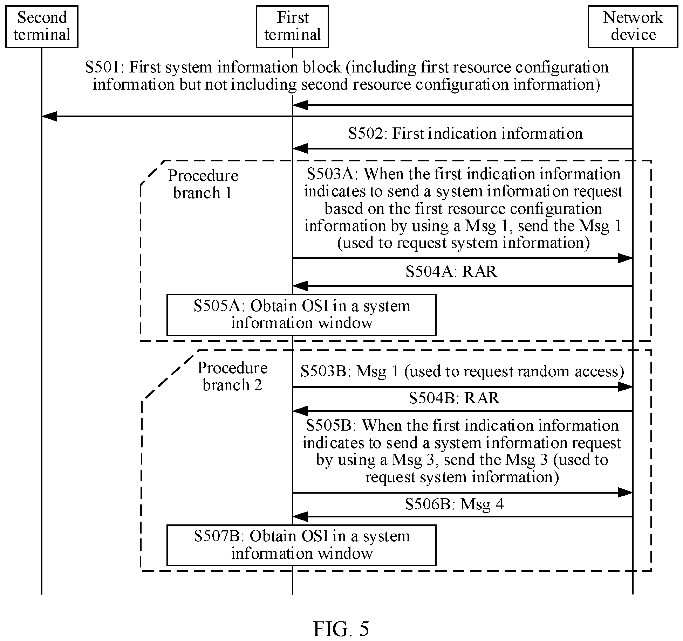

In the descriptions of the foregoing embodiment, the first terminal may send the system information request based on the first indication information of the network device by using the Msg 1 or the Msg 3. FIG. 5 is a schematic flowchart of another communication method according to an embodiment of this application. This embodiment describes how to request OSI based on a legacy random access process. For example, the method may include the following steps.

S501: A network device sends a SIB 1.

For example, the network device broadcasts the SIB 1, and both a first terminal and a second terminal within a coverage range of the network device can receive the SIB 1.

The SIB 1 includes first resource configuration information. The first resource configuration information is resource configuration information for requesting other system information by using a Msg 1. For example, the first resource configuration information is included in a system information-scheduling information (si-SchedulingInfo) field of the SIB 1.

For example, the first resource configuration information may be system information-request configuration (si-RequestConfig) or system information-request configuration supplementary uplink (si-RequestConfigSUL), where si-RequestConfigSUL specifically means that a terminal that works on a supplementary uplink (supplementary uplink, SUL) in terms of an uplink may obtain the OSI based on the configuration information si-RequestConfigSUL by using the Msg 1. Content of the configuration information si-RequestConfigSUL is basically the same as that of si-RequestConfig.

si-RequestConfig is used as an example. A format of si-RequestConfig is as follows:

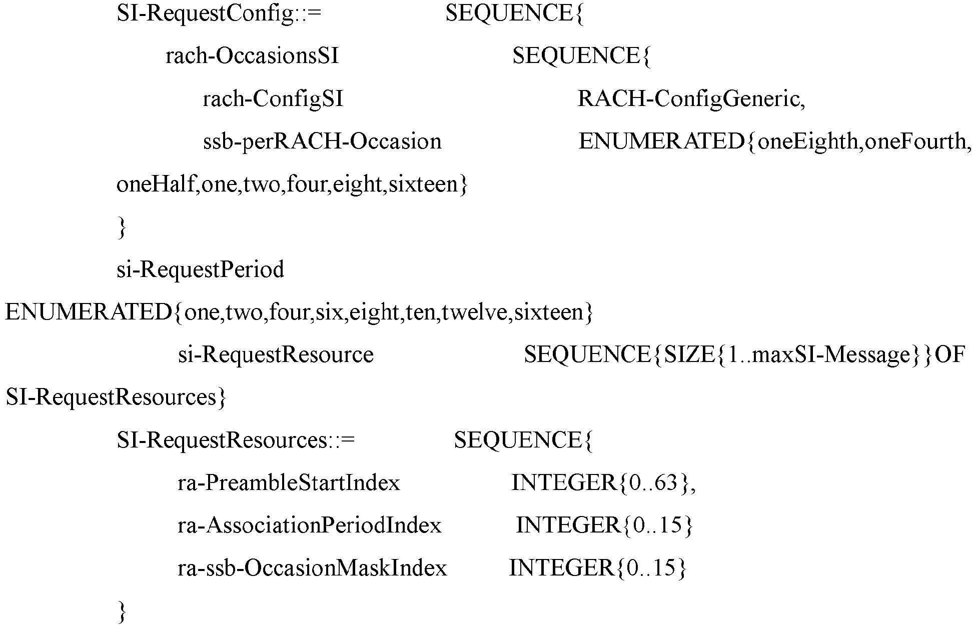

si-RequestConfig mainly includes the following information.
(1) Random access channel-occasion of system information (rach-OccasionSI): The random access channel-occasion of system information is a random access channel-occasion that is specifically used to request the system information in a RACH scenario. In addition, if this field does not exist, the second terminal uses a corresponding parameter in random access channel- common configuration (rach-configcommon) of an initial uplink BWP.
(2) Period for requesting system information (si-RequestPeriod): The second terminal may periodically request the system information. Therefore, the network device further configures a period for requesting the system information.
(3) Resources for requesting system information (si-RequestResources): The resources for requesting system information include a preamble. For example, si-RequestResources may be a list, and the list includes one or more resources for requesting the system information.

If there is only one si-RequestResource in the list, all OSI whose system information-broadcast status (si-BroadcastStatus) is set to not broadcasting (notBroadcasting) is configured. For example, the SIB 1 is broadcast, and the other system information is not broadcast and needs to be separately obtained by the second terminal. The second terminal may send the Msg 1 to the network device on si-RequestResource, to obtain all OSI that is required by the second terminal and whose si-BroadcastStatus is set to not broadcasting.

If there are a plurality of si-RequestResources in the list, the first si-RequestResource in the list corresponds to the first system information (system information, SI) message whose si-BroadcastStatus is set to notBroadcasting in a scheduling information list (scheduInfoList); the second si-RequestResource in the list corresponds to the second SI message whose si-BroadcastStatus is set to notBroadcasting in the schedulingInfoList; and the rest may be deduced by analogy. In other words, there is a one-to-one relationship between si-RequestResources and the OSI in the scheduInfoList.

Optionally, the SIB 1 does not include second resource configuration information, and the second resource configuration information is resource configuration information used by the first terminal to request the OSI by using the Msg 1.

S502: The network device sends first indication information to the first terminal.

Correspondingly, the first terminal receives the first indication information from the network device.

For a meaning of the first indication information and specific implementation of this step, refer to related descriptions in step S401 in the foregoing embodiment. Details are not described herein again.

For example, an execution sequence of the foregoing steps S501 and S502 is not limited in this embodiment. S501 may be performed before S502, S502 may be performed before S501, or S501 and S502 may be performed at the same time.

The first terminal and the network device choose, based on content of the first indication information, to perform one of the following procedure branch 1 or procedure branch 2.

### Procedure branch 1:

S503A: When the first indication information indicates to send a system information request based on the first resource configuration information by using the Msg 1, the first terminal sends the Msg 1 to the network device based on the first indication information, where the Msg 1 is used to request the system information.

For specific implementation of this step, refer to step S402A in the foregoing embodiment. For example, a radio resource control (radio resource control, RRC) layer of the first terminal triggers a media access control (media access control, MAC) layer to initiate an initial random access process by using the resources for requesting system information (si-RequestResources), the random access channel-occasion of system information (rach-OccasionSI), and the like in si-RequestConfig or si-RequestConfigSUL.

For example, the first terminal may send a preamble to the network device based on/by reusing rach-OccasionSI, si-RequestPeriod, and si-RequestResources that are configured by using the first resource configuration information, to request the OSI (or a SIB) that is not broadcast.

The network device configures, for the second terminal, a dedicated random access resource for requesting the system information, and the first terminal reuses the first resource configuration information, and sends a preamble corresponding to the SI requested by using the Msg 1.

When the first terminal requests the OSI by using the Msg 1, one piece of OSI (that is, a group of SIBs) or a plurality pieces of OSI may be requested.

S504A: After receiving the Msg 1 sent by the first terminal, the network device sends a RAR to the first terminal.

Correspondingly, the first terminal receives the RAR.

For example, the first terminal receives the RAR based on the first resource configuration information. For example, the RAR is received on a control resource set (control resource set, COREST) 0 resource configured by using the first resource configuration information, in corresponding search space, and in a RAR receive window.

The RAR includes a RAPID. DCI for scheduling the RAR is scrambled by using a RA_RNTI.

The first terminal descrambles the DCI by using the RA_RNTI. After the descrambling succeeds, the RAR is obtained. The first terminal determines, through comparison, whether the RAPID in the RAR is consistent with a RAPID used when the first terminal sends the Msg 1, and if the RAPIDs are consistent, it is considered that a correct RAR is received.

S505A: After receiving the RAR, the first terminal obtains the OSI in a system information window.

The network device determines, based on a detected preamble, the OSI requested by the first terminal, and determines, based on a random access channel occasion (RACH occasion, RO) at which the preamble is located, a transmit beam for sending the OSI. For example, if only one si-RequestResource is configured in step S501, the network device determines that the first terminal requests all OSI that is set to not broadcasting. If a plurality of si-RequestResources are configured in step S501, the network device determines, based on si-RequestResource used by the first terminal to send the Msg 1, the OSI requested by the first terminal. For example, if the first terminal sends the Msg 1 by using the first si-RequestResource, it is determined that the first terminal requests the first SI message whose si-BroadcastStatus is set to not broadcasting in the scheduInfoList; or if the first terminal sends the Msg 1 by using the second si-RequestResource, it is determined that the first terminal requests the second SI message whose si-BroadcastStatus is set to not broadcasting in the scheduInfoList, and so on.

After receiving the RAR, if the first terminal determines that the network device has received the system information request, the first terminal starts to obtain the OSI in the system information window, to be specific, obtains scheduling information of the OSI and receives the OSI.

### Procedure branch 2:

S503B: The first terminal sends the Msg 1 to the network device.

The Msg 1 may be used to request random access. Refer to a meaning of the Msg 1 in an existing random access process.

S504B: After receiving the Msg 1 sent by the first terminal, the network device sends a RAR to the first terminal.

The RAR is used to respond to the Msg 1, that is, a random access request.

S505B: When the first indication information indicates to send a system information request by using a Msg 3, the first terminal sends the Msg 3 to the network device based on the first indication information, where the Msg 3 is used to request the system information.

For specific implementation of this step, refer to step S402B in the foregoing embodiment.

In this embodiment, the Msg 3 is also referred to as a radio resource control system information request message (RRCSytemInfoRequest message). A format of the RRCSytemInfoRequest message is as follows:

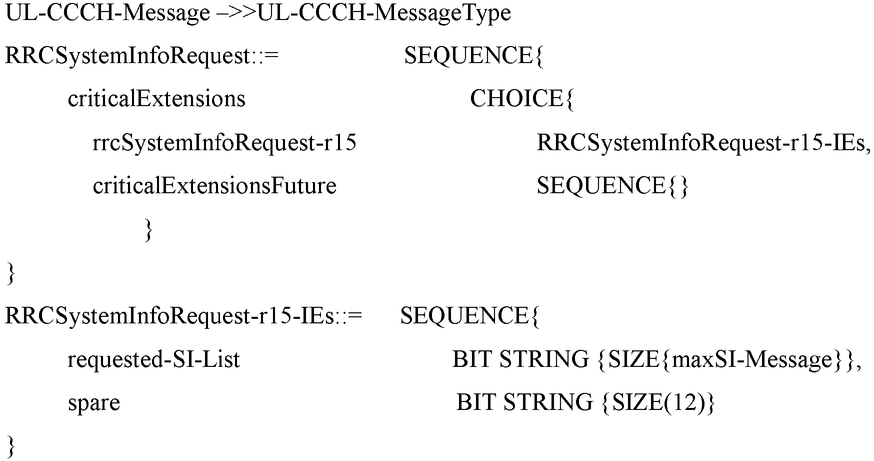

The RRCSytemInfoRequest message includes a requested system information list (requested-SI-list). The requested-SI-list includes one or more pieces of OSI requested by the first terminal.

S506B: After receiving the Msg 3 sent by the first terminal, the network device sends a Msg 4 to the first terminal.

The first terminal receives the Msg 4. The Msg 4 includes a user equipment contention resolution identifier. If the first terminal can obtain the user equipment contention resolution identifier through parsing, and the user equipment contention resolution identifier is the same as first 48 bits of the Msg 3, it indicates that access performed by the first terminal succeeds. Then, the first terminal may continue a subsequent operation. For example, the first terminal monitors and receives the OSI in a system information window.

S507B: After receiving the Msg 4, the first terminal obtains the OSI in the system information window.

After receiving the Msg 3, the network device sends, in the system information window based on the requested-SI-list carried in the Msg 3, the one or more pieces of OSI requested by the first terminal to the first terminal. The first terminal obtains the OSI in the system information window. According to the communication method provided in this embodiment of this application, based on the indication information of the network device, the first terminal sends the system information request based on the first resource configuration information by using the Msg 1, or sends the system information request by using the Msg 3, so that reliability of obtaining the system information by the first terminal is improved.

When the first indication information indicates to send the system information request based on the first resource configuration information by using the Msg 1, the network device does not need to separately configure, for the first terminal, a resource for requesting the other system information by using the Msg 1, and a resource configured by using the first resource configuration information can be reused, so that signaling overheads are reduced.

The embodiment shown in FIG. 5 is described as an example based on a four-step random access process. For example, the system information may alternatively be requested based on a two-step random access process. In step S502, the first indication information may indicate to send the system information request by using the Msg 1, or indicate to send the system information request by using the Msg 3 or a Msg A.

If the first indication information indicates to send the system information request by using the Msg 1, refer to the foregoing procedure branch 1 for a procedure.

The first indication information indicates to send the system information request by using the Msg 3 or the Msg A, and the first terminal supports two-step random access and meets a trigger condition of using two-step random access (for example, only two-step random access is configured for this BWP, or two-step random access and four-step random access are configured for this BWP, and a downlink path loss measured by the first terminal is greater than a threshold). In this case, the first terminal may perform access by using two-step random access. During sending of the Msg A, content of the Msg 3 may be sent on a PUSCH. In other words, the system information is requested by using an RRC system message request message. In other words, a payload (payload) (instead of preamble) part of the Msg A carries the RRC system message request message. After successfully receiving response information, a conflict resolution message, or a Msg B, the first terminal obtains the OSI in the system message window.

If the first terminal does not support two-step random access, or does not meet the trigger condition of using two-step random access, refer to the foregoing procedure branch 2 to request the OSI.

The foregoing descriptions are applicable to another embodiment including the first indication information, for example, steps S402B and S803B.

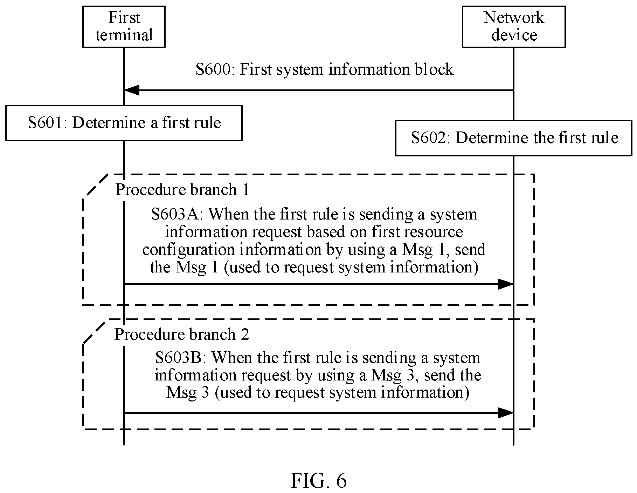

In the descriptions of the foregoing embodiment, the first terminal may determine, based on the first indication information sent by the network device, to request the OSI by using the Msg 1 or the Msg 3. In the following embodiments, the network device may alternatively not need to send the first indication information, and the first terminal determines to request the OSI by using the Msg 1, the Msg 3, or the Msg A, so that signaling overheads are reduced. FIG. 6 is a schematic flowchart of another communication method according to an embodiment of this application. For example, the method may include the following steps.

S600: A network device sends a SIB 1.

For example, the network device broadcasts the SIB 1, and a first terminal within a coverage range of the network device can receive the SIB 1.

For specific implementation of this step, refer to the foregoing step S501. The SIB 1 includes first resource configuration information. In other words, the first resource configuration information is carried in the SIB 1. For a meaning of the first resource configuration information and content included in the first resource configuration information, refer to descriptions in the foregoing embodiments. Details are not described herein again. In addition, the SIB 1 may not include second resource configuration information. The second resource configuration information is resource configuration information used by the first terminal to request other system information by using a Msg 1.

In addition, the SIB 1 may further include a first initial BWP configuration (including an initial uplink BWP and/or an initial downlink BWP), or may include a second initial BWP configuration (including an initial uplink BWP and/or an initial downlink BWP). The first initial BWP configuration is configured for a second terminal, and the second initial BWP configuration is configured for the first terminal. When the SIB 1 includes the second initial BWP configuration, the first terminal can work normally only if a channel bandwidth supported by the first terminal is greater than or equal to a bandwidth of a second initial BWP, and the first terminal considers that the second initial BWP is an initial BWP of the first terminal. When the SIB 1 does not include the second initial BWP configuration, if a channel bandwidth supported by the first terminal is greater than or equal to a bandwidth of a first initial BWP, the first terminal considers that a BWP configured by using the first initial BWP configuration is an initial BWP of the first terminal, or the first terminal considers that the first terminal can work on the first initial BWP.

S601: The first terminal determines a first rule.

In an implementation, the first rule may be specified in advance in a protocol, or the first rule may be written into the first terminal when the first terminal is delivered from a factory. The first rule may also be referred to as a first protocol.

In another implementation, the first rule may alternatively be determined through pre\-negotiation between the first terminal and the network device, for example, the first rule is preconfigured by using signaling. The first rule may also be referred to as a first convention.

The first rule is that the first terminal sends a system information request based on the first resource configuration information by using the Msg 1; or the first rule is that the first terminal sends a system information request by using a Msg 3.

Specifically, in an implementation, the first rule is that when the network device does not configure the first terminal to send the system information request by using the Msg 1, the first terminal sends the system information request based on the first resource configuration information by using the Msg 1; or the first rule is that when the network device does not configure the first terminal to send the system information request by using the Msg 1, the first terminal sends the system information request by using the Msg 3.

For example, when a size of a first frequency domain resource is less than or equal to the channel bandwidth supported by the first terminal, or when the bandwidth of the first initial BWP is less than or equal to the channel bandwidth supported by the first terminal, the first terminal sends the system information request based on the first resource configuration information by using the Msg 1.

In a first branch, the first terminal compares the size of the first frequency domain resource with the channel bandwidth supported by the first terminal. The first frequency domain resource is a frequency domain resource that is configured by using the first resource configuration information and that is used to request the OSI by using the Msg 1, or the first frequency domain resource is a set of RO frequency domain resources for requesting SI by using the Msg 1 (a total quantity of frequency domain resources occupied by all RO frequency domain resources). After receiving the SIB 1, the first terminal obtains the first resource configuration information carried in the SIB 1, and obtains the first frequency domain resource in the first configuration information. When the size of the first frequency domain resource is less than or equal to the channel bandwidth supported by the first terminal, the first terminal sends the Msg 1 based on the first resource configuration information, to request the OSI.

In a second branch, in step S600, when the SIB 1 does not include the second initial BWP configuration, if the channel bandwidth supported by the first terminal is greater than or equal to the bandwidth of the first initial BWP, the first terminal considers that the BWP configured by using the first initial BWP configuration is the initial BWP of the first terminal, or the first terminal considers that the first terminal can work on the first initial BWP.

Alternatively, when the SIB 1 includes the first initial BWP configuration and the second initial BWP configuration, the first terminal compares the bandwidth of the first initial BWP with the channel bandwidth supported by the first terminal. When the bandwidth of the first initial BWP is less than or equal to the channel bandwidth supported by the first terminal, the first terminal sends the Msg 1 based on the first resource configuration information, to request the OSI.

In other words, if a current serving cell supports working of the second terminal, the first terminal compares the bandwidth of the first initial BWP with the channel bandwidth supported by the first terminal. When the bandwidth of the first initial BWP is less than or equal to the channel bandwidth supported by the first terminal, the first terminal sends the Msg 1 based on the first resource configuration information, to request the OSI. Otherwise, the system message request message is sent by using the Msg 3. In other words, this is irrelevant to whether the SIB 1 is configured with a second BWP configuration.

For another example, when a size of a first frequency domain resource is greater than the channel bandwidth supported by the first terminal, or when the bandwidth of the first initial BWP is greater than the channel bandwidth supported by the first terminal, the first terminal sends the system information request by using the Msg 3.

In another implementation, the first rule is that when the network device does not configure the first terminal to send the system information request by using the Msg 1, the first terminal sends the system information request based on the first resource configuration information by using the Msg 1.

In another implementation, the first rule is that when the network device does not configure the first terminal to send the system information request by using the Msg 1, the first terminal sends the system information request by using the Msg 3.

S602: The network device determines the first rule.

For example, a manner in which the network device determines the first rule may be the same as a manner in which the first terminal determines the first rule. To be specific,

in an implementation, the first rule may be specified in advance in the protocol. The network device obtains the first rule. The first rule may also be referred to as the first protocol.

In another implementation, the first rule may alternatively be determined through pre-negotiation between the network device and the first terminal. The first rule may also be referred to as the first convention.

The first rule is that the network device receives the system information request based on the first resource configuration information by using the Msg 1; or the first rule is that the network device receives the system information request by using the Msg 3.

For example, the first rule is that when the network device does not configure the first terminal to send the system information request by using the Msg 1, the network device receives the system information request based on the first resource configuration information by using the Msg 1; or the first rule is that when the network device does not configure the first terminal to send the system information request by using the Msg 1, the network device receives the system information request by using the Msg 3.

The first terminal and the network device choose, based on content of the first rule, to perform one of the following procedure branch 1 or procedure branch 2.

### Procedure branch 1:

S603A: When the first rule is sending the system information request based on the first resource configuration information by using the Msg 1, the first terminal sends the Msg 1 to the network device according to the first rule, where the Msg 1 is used to request the system information.

Correspondingly, when the first rule is receiving the system information request based on the first resource configuration information by using the Msg 1, the network device receives the Msg 1 according to the first rule.

For sending, by the first terminal, the system information request by using the Msg 1, refer to the foregoing step S402A or S503A. Details are not described herein again.

For example, when the first terminal sends the system information request according to the first rule by using the Msg 1, the network device needs to ensure that a frequency domain resource that is configured by using the first resource configuration information and that is used for sending the system information request by using the Msg 1 does not exceed a maximum bandwidth of the first terminal or does not exceed a bandwidth (uplink or downlink) supported by the first terminal. The maximum bandwidth of the first terminal is a maximum value of a bandwidth that can be supported by the first terminal.

For example, when the first terminal sends the system information request according to the first rule by using the Msg 1, the network device needs to ensure that the first initial BWP (uplink or downlink) does not exceed the maximum bandwidth of the first terminal or does not exceed the bandwidth (uplink or downlink) supported by the first terminal. The maximum bandwidth of the first terminal is a maximum value of a bandwidth that can be supported by the first terminal.

Further, after step S603A, the following steps may be further included: The network device sends a RAR, and the first terminal receives the RAR; and the first terminal obtains the OSI in a system information window. For details, refer to the foregoing steps S504A and S505A.

### Procedure branch 2:

S603B: When the first rule is sending the system information request by using the Msg 3, the first terminal sends the Msg 3 to the network device according to the first rule, where the Msg 3 is used to request the system information.

Correspondingly, when the first rule is receiving the system information request by using the Msg 3, the network device receives the Msg 3 according to the first rule.

For sending, by the first terminal, the system information request by using the Msg 3, refer to the foregoing step S402B or S505B. Details are not described herein again.

Further, before step S603B, the following steps may be further included: The first terminal sends the Msg 1 to the network device, to request random access; and after receiving the Msg 1, the network device sends a RAR to the first terminal. For details, refer to the foregoing steps S503B and S504B.

After step S603B, the following steps may be further included: The network device sends a Msg 4 to the first terminal; and the first terminal obtains the OSI in the system information window. For details, refer to the foregoing steps S506B and S507B.

According to the communication method provided in this embodiment of this application, the first rule specifies that the first terminal sends the system information request to the network device based on the first resource configuration information by using the Msg 1 or sends the system information request to the network device by using the Msg 3, and the network device receives, according to the same first rule, the system information request sent by the first terminal. Therefore, the first terminal and the network device have consistent understanding, and reliability of obtaining the system information by the first terminal is improved.

When the first rule is sending the system information request based on the first resource configuration information by using the Msg 1, the network device does not need to separately configure, for the first terminal, a resource for requesting the other system information by using the Msg 1, and a resource configured by using the first resource configuration information can be reused, so that signaling overheads are reduced.

The embodiment shown in FIG. 6 is described as an example based on a four-step random access process. For example, the system information may alternatively be requested based on a two-step random access process. In this case, in step S601, the first terminal determines the first rule. The first rule is that the first terminal sends the system information request based on the first resource configuration information by using the Msg 1; or the first rule is that the first terminal sends the system information request by using the Msg 3 or a Msg A. In step S602, the network device determines the first rule. The first rule is that the network device receives the system information request based on the first resource configuration information by using the Msg 1; or the first rule is that the network device receives the system information request by using the Msg 3 or the Msg A.

If the first rule is that the first terminal sends the system information request based on the first resource configuration information by using the Msg 1, refer to the foregoing procedure branch 1 for a procedure.

The first rule is that the first terminal sends the system information request by using the Msg 3 or the Msg A, and the first terminal supports two-step random access and meets a trigger condition of using two-step random access (for example, only two-step random access is configured for this BWP, or two-step random access and four-step random access are configured for this BWP, and a downlink path loss measured by the first terminal is greater than a threshold). In this case, the first terminal may perform access by using two-step random access. During sending of the Msg A, content of the Msg 3 may be sent on a PUSCH. In other words, the system information is requested by using an RRC system message request message. In other words, a payload (instead of preamble) part of the Msg A carries the RRC system message request message. After successfully receiving response information, a conflict resolution message, or a Msg B, the first terminal obtains the OSI in the system message window.

If the first rule is that the first terminal sends the system information request by using the Msg 3 or the Msg A, and the first terminal does not support two-step random access, or does not meet the trigger condition of using two-step random access, refer to the foregoing procedure branch 2 to request the OSI.

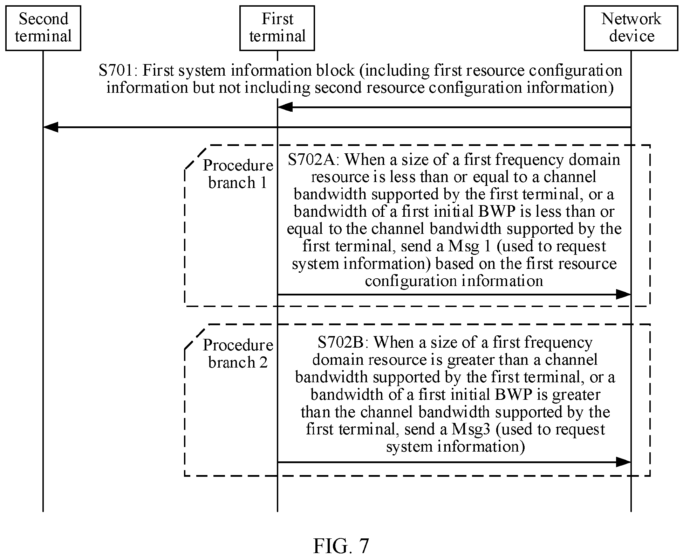

In addition to determining, based on an indication or according to a rule of the network device, to request the OSI by using the Msg 1 or the Msg 3, the first terminal may further determine, based on a parameter such as the channel bandwidth of the first terminal, to request the OSI by using the Msg 1 or the Msg 3. FIG. 7 is a schematic flowchart of another communication method according to an embodiment of this application. For example, the method may include the following steps.

S701: A network device sends a SIB 1.

For example, the network device broadcasts the SIB 1, and a first terminal within a coverage range of the network device can receive the SIB 1.

The SIB 1 includes first resource configuration information. The first resource configuration information is resource configuration information for requesting other system information by using a Msg 1. The first resource configuration information may be resource configuration information that is configured by the network device for any terminal and that is used to request the other system information by using the Msg 1. For example, the first resource configuration information may be resource configuration information that is configured by the network device for a second terminal and that is used to request the other system information by using the Msg 1. In addition, the SIB 1 may not include second resource configuration information, and the second resource configuration information is resource configuration information used by the first terminal to request other system information by using the Msg 1.

The SIB 1 may further include a first initial BWP configuration (including an initial uplink BWP and/or an initial downlink BWP), or may include a second initial BWP configuration (including an initial uplink BWP and/or an initial downlink BWP). The first initial BWP configuration is configured for the second terminal, and the second initial BWP configuration is configured for the first terminal. When the SIB 1 includes the second initial BWP configuration, the first terminal can work normally only if a channel bandwidth supported by the first terminal is greater than or equal to a bandwidth of a second initial BWP, and the first terminal considers that the second initial BWP is an initial BWP of the first terminal. When the SIB 1 does not include the second initial BWP configuration, if a channel bandwidth supported by the first terminal is greater than or equal to a bandwidth of a first initial BWP, the first terminal considers that a BWP configured by using the first initial BWP configuration is an initial BWP of the first terminal, or the first terminal considers that the first terminal can work on the first initial BWP.

The first terminal chooses, based on a bandwidth condition, to perform one of the following procedure branch 1 or procedure branch 2.

### Procedure branch 1:

S702A: When a size of a first frequency domain resource is less than or equal to the channel bandwidth supported by the first terminal, or the bandwidth of the first initial BWP is less than or equal to the channel bandwidth supported by the first terminal, the first terminal sends the Msg 1 based on the first resource configuration information. The Msg 1 is used to request system information.

First, the first terminal determines the channel bandwidth supported by the first terminal or a maximum channel bandwidth. The channel bandwidth supported by the first terminal includes a bandwidth supported by an uplink channel of the first terminal or a downlink channel of the first terminal. The maximum channel bandwidth of the first terminal is a maximum value of a channel bandwidth that can be supported by the first terminal.

Then, in a first branch, the first terminal compares the size of the first frequency domain resource with the channel bandwidth supported by the first terminal. The first frequency domain resource is a frequency domain resource that is configured by using the first resource configuration information and that is used to request the OSI by using the Msg 1, or the first frequency domain resource is a set of RO frequency domain resources for requesting the SI by using the Msg 1. After receiving the SIB 1, the first terminal obtains the first resource configuration information carried in the SIB 1, and obtains the first frequency domain resource in the first configuration information. When the size of the first frequency domain resource is less than or equal to the channel bandwidth supported by the first terminal, the first terminal sends the Msg 1 based on the first resource configuration information, to request the OSI.

In a second branch, the first initial BWP is determined in step S701. The first terminal compares the bandwidth of the first initial BWP with the channel bandwidth supported by the first terminal. When the bandwidth of the first initial BWP is less than or equal to the channel bandwidth supported by the first terminal, the first terminal sends the Msg 1 based on the first resource configuration information, to request the OSI.

For sending, by the first terminal, a system information request by using the Msg 1, refer to the foregoing step S402A or S503A. Details are not described herein again.

Alternatively, the first terminal may perform frequency modulation, so that even if the size of the first frequency domain resource is greater than the maximum bandwidth of the first terminal, the Msg 1 is sent on an RO outside the bandwidth of the first terminal.

Further, after step S702A, the following steps may be further included: The network device sends a RAR, and the first terminal receives the RAR; and the first terminal obtains the OSI in a system information window. For details, refer to the foregoing steps S504A and S505A.

### Procedure branch 2:

S702B: When a size of a first frequency domain resource is greater than the channel bandwidth supported by the first terminal, or the bandwidth of the first initial BWP is greater than the channel bandwidth supported by the first terminal, the first terminal sends a Msg 3. The Msg 3 is used to request system information.

In one branch, the first terminal compares the size of the first frequency domain resource with the channel bandwidth supported by the first terminal. When the size of the first frequency domain resource is greater than the channel bandwidth supported by the first terminal, the first terminal sends the Msg 3, to request the OSI.

In another branch, the first terminal compares the bandwidth of the first initial BWP with the channel bandwidth supported by the first terminal. When the bandwidth of the first initial BWP is greater than the channel bandwidth supported by the first terminal, the first terminal sends the Msg 3, to request the OSI.

For sending, by the first terminal, a system information request by using the Msg 3, refer to the foregoing step S402B or S505B. Details are not described herein again.

Further, before step S702B, the following steps may be further included: The first terminal sends the Msg 1 to the network device, to request random access; and after receiving the Msg 1, the network device sends a RAR to the first terminal. For details, refer to the foregoing steps S503B and S504B.

After step S702B, the following steps may be further included: The network device sends a Msg 4 to the first terminal; and the first terminal obtains the OSI in a system information window. For details, refer to the foregoing steps S506B and S507B.

According to the communication method provided in this embodiment of this application, the first terminal determines to send the system information request by using the Msg 1 or the Msg 3 based on a relationship between the size of the first frequency domain resource configured by the network device for the second terminal and the channel bandwidth supported by the first terminal, or a relationship between the bandwidth of the first initial BWP and the channel bandwidth supported by the first terminal, so that reliability of obtaining the system information by the first terminal is improved. Especially when the network device does not configure, for the first terminal, resource configuration information for requesting the other system information by using the Msg 1, the first terminal can determine a resource for a system information request message.

The network device does not need to separately configure, for the first terminal, a resource for requesting the other system information by using the Msg 1, and the first resource configuration information can be reused, so that signaling overheads are reduced.

The embodiment shown in FIG. 7 is described as an example based on a four-step random access process. For example, the system information may alternatively be requested based on a two-step random access process. In this case, when the size of the first frequency domain resource is less than or equal to the channel bandwidth supported by the first terminal, or the bandwidth of the first initial BWP is less than or equal to the channel bandwidth supported by the first terminal, the first terminal sends the Msg 1 based on the first resource configuration information, to request the OSI.

When the size of the first frequency domain resource is greater than the channel bandwidth supported by the first terminal, or the bandwidth of the first initial BWP is greater than the channel bandwidth supported by the first terminal, the first terminal sends the Msg 3 or a Msg A, to request the OSI.

Specifically, the size of the first frequency domain resource is greater than the channel bandwidth supported by the first terminal, or the bandwidth of the first initial BWP is greater than the channel bandwidth supported by the first terminal, and the first terminal supports two-step random access and meets a trigger condition of using two-step random access (for example, only two-step random access is configured for this BWP, or two-step random access and four-step random access are configured for this BWP, and a downlink path loss measured by the first terminal is greater than a threshold). In this case, the first terminal may perform access by using two-step random access. During sending of the Msg A, content of the Msg 3 may be sent on a PUSCH. In other words, the system information is requested by using an RRC system message request message. In other words, a payload (instead of preamble) part of the Msg A carries the RRC system message request message. After successfully receiving response information, a conflict resolution message, or a Msg B, the first terminal obtains the OSI in the system message window.

When the size of the first frequency domain resource is greater than the channel bandwidth supported by the first terminal, or the bandwidth of the first initial BWP is greater than the channel bandwidth supported by the first terminal, and the first terminal does not support two-step random access or does not meet the trigger condition of using two-step random access, refer to the foregoing procedure branch 2 to request the OSI.

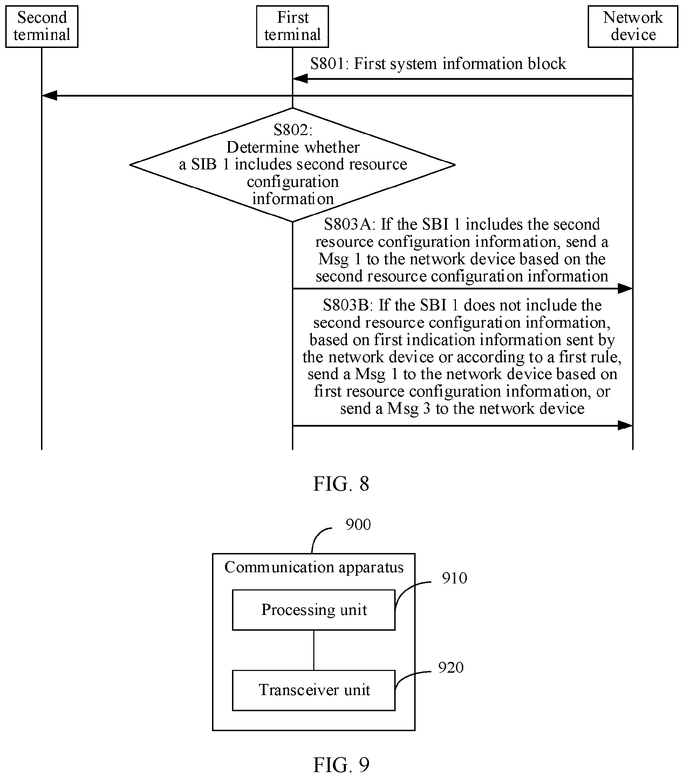

A premise of all the foregoing embodiments is that the network device does not configure, for the first terminal, a resource for sending the system information request by using the Msg 1. In this embodiment, the first terminal may select different manners to request the OSI based on whether the network device configures, for the first terminal, the resource for sending the system information request by using the Msg 1. FIG. 8 is a schematic flowchart of another communication method according to an embodiment of this application. For example, the method may include the following steps.

S801: A network device sends a SIB 1.

The SIB 1 includes first resource configuration information. The first resource configuration information is resource configuration information for requesting other system information by using a Msg 1. The first resource configuration information may be resource configuration information that is configured by the network device for any terminal and that is used to request the other system information by using the Msg 1. For example, the first resource configuration information may be resource configuration information that is configured by the network device for a second terminal and that is used to request the other system information by using the Msg 1.

In this embodiment, the SIB 1 may further include second resource configuration information, or may not include second resource configuration information. The second resource configuration information is resource configuration information used by a first terminal to request the OSI by using the Msg 1.

S802: After receiving the SIB 1, the first terminal determines whether the SIB 1 includes the second resource configuration information. If the SIB 1 includes the second resource configuration information, step S803A is performed; otherwise, step S803B is performed.

After receiving the SIB 1, the first terminal parses the SIB 1, and determines whether the SIB 1 includes the second resource configuration information.

S803A: The first terminal sends the Msg 1 to the network device based on the second resource configuration information, where the Msg 1 is used to request system information.

After obtaining the second resource configuration information by parsing the SIB 1, the first terminal sends the Msg 1 to the network device based on a resource configured by using the second resource configuration information, to request the OSI.

S803B: Based on first indication information sent by the network device or according to a first rule, the first terminal sends the Msg 1 to the network device based on the first resource configuration information, or sends a Msg 3 to the network device. The Msg 1 or the Msg 3 is used to request the system information.

The first terminal parses the SIB 1 and determines that the SIB 1 does not include the second resource configuration information. In this case, with reference to the descriptions of embodiments shown in FIG. 4 to FIG. 7, the first terminal may send the Msg 1 to the network device based on the first resource configuration information, or send the Msg 3 to the network device, to request the OSI.

According to the communication method provided in this embodiment of this application, when the network device configures, for the first terminal, the second resource configuration information for sending a system information request by using the Msg 1, the first terminal sends the system information request based on the second resource configuration information by using the Msg 1; otherwise, based on the first indication information sent by the network device or according to the first rule, the first terminal sends the Msg 1 to the network device based on the first resource configuration information, or sends the Msg 3 to the network device. This improves reliability of obtaining the system information by the first terminal.

The foregoing describes a plurality of embodiments in which the first terminal obtains the OSI. The plurality of embodiments may be combined with each other, and meanings of a plurality of parameters involved in the foregoing plurality of embodiments may be mutually referenced and cited.

It may be understood that, to implement functions in the foregoing embodiments, the network device and the first terminal include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

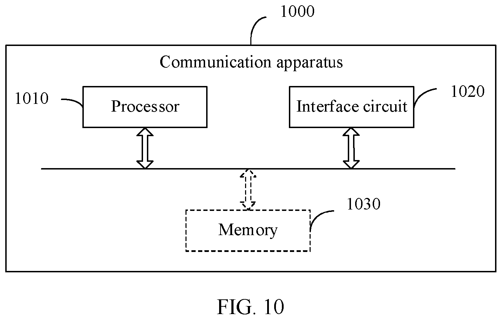

FIG. 9 and FIG. 10 are schematic diagrams of structures of possible communication apparatuses according to embodiments of this application. These communication apparatuses may be configured to implement functions of the first terminal or the network device in the foregoing method embodiments, and therefore may also implement beneficial effects of the foregoing method embodiments. In embodiments of this application, the communication apparatus may be one of the terminals 120a to 120j shown in FIG. 1, may be the network device 110a or 110b shown in FIG. 1, or may be a module (such as a chip) used in the first terminal or the network device.

As shown in FIG. 9, a communication apparatus 900 includes a processing unit 910 and a transceiver unit 920. The communication apparatus 900 is configured to implement functions of the first terminal or the network device in the method embodiments shown in FIG. 4 to FIG. 7.

When the communication apparatus 900 is configured to implement functions of the first terminal in the method embodiment shown in FIG. 4 or FIG. 5, the transceiver unit 920 is configured to receive first indication information from the network device; and the transceiver unit 920 is further configured to send a system information request based on the first indication information, where the first indication information indicates to send the system information request based on first resource configuration information by using a first message Msg 1, and the first resource configuration information is resource configuration information for requesting other system information by using the Msg 1; or the first indication information indicates to send the system information request by using a third message Msg 3.

When the communication apparatus 900 is configured to implement functions of the network device in the method embodiment shown in FIG. 4 or FIG. 5, the transceiver unit 920 is configured to send first indication information; and the transceiver unit 920 is further configured to receive a system information request from the first terminal, where the first indication information indicates to send the system information request based on first resource configuration information by using a first message Msg 1, and the first resource configuration information is resource configuration information for requesting other system information by using the Msg 1; or the first indication information indicates to send the system information request by using a third message Msg 3.

When the communication apparatus 900 is configured to implement functions of the first terminal in the method embodiment shown in FIG. 6, the processing unit 910 is configured to determine a first rule; and the transceiver unit 920 is configured to send a system information request according to the first rule, where the first rule is sending the system information request based on first resource configuration information by using a first message Msg 1, and the first resource configuration information is resource configuration information for requesting other system information by using the Msg 1; or the first rule is sending the system information request by using a third message Msg 3.

When the communication apparatus 900 is configured to implement functions of the network device in the method embodiment shown in FIG. 6, the processing unit 910 is configured to determine a first rule; and the transceiver unit 920 is configured to receive a system information request from a first terminal according to the first rule, where the first rule is receiving the system information request based on first resource configuration information by using a first message Msg 1, and the first resource configuration information is resource configuration information for requesting other system information by using the Msg 1; or the first rule is receiving the system information request by using a third message Msg 3.

When the communication apparatus 900 is configured to implement functions of the first terminal in the method embodiment shown in FIG. 7, the transceiver unit 920 is configured to receive a first system information block, where the first system information block includes first resource configuration information; and the transceiver unit 920 is further configured to: when a size of a first frequency domain resource is less than or equal to a channel bandwidth supported by the first terminal, where the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, send a system information request based on the first resource configuration information by using the Msg 1; or when the size of the first frequency domain resource is greater than the channel bandwidth supported by the first terminal, where the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, send the system information request by using a third message Msg 3.

When the communication apparatus 900 is configured to implement functions of the network device in the method embodiment shown in FIG. 7, the transceiver unit 920 is configured to send a first system information block, where the first system information block includes first resource configuration information; and the transceiver unit 920 is further configured to: when a size of a first frequency domain resource is less than or equal to a channel bandwidth supported by the first terminal, where the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, receive a system information request sent by the first terminal based on the first resource configuration information by using the Msg 1; or when the size of the first frequency domain resource is greater than the channel bandwidth supported by the first terminal, where the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, receive the system information request sent by the first terminal by using a third message Msg 3.

For more detailed descriptions of the processing unit 910 and the transceiver unit 920, refer directly to related descriptions in the method embodiments shown in FIG. 4 to FIG. 7. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to: store instructions executed by the processor 1010, store input data required by the processor 1010 to run instructions, or store data generated after the processor 1010 runs instructions.

When the communication apparatus 1000 is configured to implement the methods shown in FIG. 4 to FIG. 7, the processor 1010 is configured to implement functions of the processing unit 910, and the interface circuit 1020 is configured to implement functions of the transceiver unit 920.

When the communication apparatus is a chip used in a terminal, the chip in the terminal implements functions of the first terminal in the foregoing method embodiments. The chip in the terminal receives information from another module (for example, a radio frequency module or an antenna) in the first terminal, and the information is sent by a network device to the first terminal; or the chip in the terminal sends information to another module (for example, a radio frequency module or an antenna) in the first terminal, and the information is sent by the first terminal to a network device.

When the communication apparatus is a chip used in a network device, the chip in the network device implements functions of the network device in the foregoing method embodiments. The chip in the network device receives information from another module (for example, a radio frequency module or an antenna) in the network device, and the information is sent by a first terminal to the network device; or the chip in the network device sends information to another module (for example, a radio frequency module or an antenna) in the network device, and the information is sent by the network device to a first terminal.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor, or may be any conventional processor.

The method steps in embodiments of this application may be implemented by hardware, or may be implemented by a processor executing software instructions. The software instructions may include a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and can write information into the storage medium. Certainly, the storage medium may alternatively be a component of the processor. The processor and the storage medium may be located in an ASIC. In addition, the ASIC may be located in the network device or the first terminal. Certainly, the processor and the storage medium may alternatively exist in the network device or the first terminal as discrete components.

An embodiment of this application further provides a communication system, including the first terminal and the network device.

An embodiment of this application further provides a computer-readable storage medium, and the computer-readable storage medium stores a computer program or instructions. When the program or the instructions are executed by a processor, the methods in the foregoing embodiments are performed.

An embodiment of this application further provides a computer program product. When the computer program product is executed on a computing device, the methods in the foregoing embodiments are performed.

All or some of the foregoing embodiments may be implemented by software, hardware, firmware, or any combination thereof. When the software is used for implementation, all or some of embodiments may be implemented in a form of a computer program product. The computer program product includes one or more computer programs or instructions. When the computer program or instructions are loaded and executed on a computer, all or some of the procedures or functions in embodiments of this application are executed. The computer may be a general-purpose computer, a dedicated computer, a computer network, a network device, a terminal, or another programmable apparatus. The computer program or instructions may be stored in a computer-readable storage medium, or transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, wherein the method comprises:
receiving, by a first terminal, first indication information from a network device; and
sending, by the first terminal, a system information request based on the first indication information, wherein
the first indication information indicates to send the system information request based on first resource configuration information by using a first message Msg 1, and the first resource configuration information is resource configuration information for requesting other system information by using the Msg 1; or
the first indication information indicates to send the system information request by using a third message Msg 3.

2. A communication method, wherein the method comprises:
determining, by a first terminal, a first rule; and
sending, by the first terminal, a system information request according to the first rule, wherein
the first rule is sending the system information request based on first resource configuration information by using a first message Msg 1, and the first resource configuration information is resource configuration information for requesting other system information by using the Msg 1; or
the first rule is sending the system information request by using a third message Msg 3.

3. The method according to claim 1 or 2, wherein the first resource configuration information is carried in a first system information block.

4. A communication method, wherein the method comprises:
receiving, by a first terminal, a first system information block, wherein the first system information block comprises first resource configuration information; and
when a size of a first frequency domain resource is less than or equal to a channel bandwidth supported by the first terminal, wherein the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, sending, by the first terminal, a system information request based on the first resource configuration information by using the Msg 1; or
when the size of the first frequency domain resource is greater than the channel bandwidth supported by the first terminal, wherein the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, sending, by the first terminal, the system information request by using a third message Msg 3.

5. The method according to claim 3 or 4, wherein the first system information block does not comprise second resource configuration information, and the second resource configuration information is resource configuration information used by the first terminal to request other system information by using the Msg 1.

6. The method according to any one of claims 1 to 5, wherein the first resource configuration information is resource configuration information used by a second terminal to request other system information by using the Msg 1, wherein
the second terminal is a broadband terminal.

7. The method according to any one of claims 1 to 6, wherein the first terminal is a narrowband terminal.

8. A communication method, wherein the method comprises:
sending, by a network device, first indication information; and
receiving, by the network device, a system information request from a first terminal, wherein
the first indication information indicates to send the system information request based on first resource configuration information by using a first message Msg 1, and the first resource configuration information is resource configuration information for requesting other system information by using the Msg 1; or
the first indication information indicates to send the system information request by using a third message Msg 3.

9. A communication method, wherein the method comprises:
determining, by a network device, a first rule; and
receiving, by the network device, a system information request from a first terminal according to the first rule, wherein
the first rule is receiving the system information request based on first resource configuration information by using a first message Msg 1, and the first resource configuration information is resource configuration information for requesting other system information by using the Msg 1; or
the first rule is receiving the system information request by using a third message Msg 3.

10. The method according to claim 8 or 9, wherein the first resource configuration information is carried in a first system information block.

11. A communication method, wherein the method comprises:
sending, by a network device, a first system information block, wherein the first system information block comprises first resource configuration information; and
when a size of a first frequency domain resource is less than or equal to a channel bandwidth supported by a first terminal, wherein the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, receiving, by the network device, a system information request sent by the first terminal based on the first resource configuration information by using the Msg 1; or
when the size of the first frequency domain resource is greater than the channel bandwidth supported by the first terminal, wherein the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, receiving, by the network device, the system information request sent by the first terminal by using a third message Msg 3.

12. The method according to claim 10 or 11, wherein the first system information block does not comprise second resource configuration information, and the second resource configuration information is resource configuration information used by the first terminal to request other system information by using the Msg 1.

13. The method according to any one of claims 8 to 12, wherein the first resource configuration information is resource configuration information used by a second terminal to request other system information by using the Msg 1, wherein
the second terminal is a broadband terminal.

14. The method according to any one of claims 8 to 13, wherein the first terminal is a narrowband terminal.

15. A communication apparatus, wherein the apparatus comprises a transceiver unit, wherein
the transceiver unit is configured to receive first indication information from a network device; and
the transceiver unit is further configured to send a system information request based on the first indication information, wherein
the first indication information indicates to send the system information request based on first resource configuration information by using a first message Msg 1, and the first resource configuration information is resource configuration information for requesting other system information by using the Msg 1; or
the first indication information indicates to send the system information request by using a third message Msg 3.

16. A communication apparatus, wherein the apparatus comprises a processing unit and a transceiver unit, wherein
the processing unit is configured to determine a first rule; and
the transceiver unit is further configured to send a system information request according to the first rule, wherein
the first rule is sending the system information request based on first resource configuration information by using a first message Msg 1, and the first resource configuration information is resource configuration information for requesting other system information by using the Msg 1; or
the first rule is sending the system information request by using a third message Msg 3.

17. The apparatus according to claim 15 or 16, wherein the first resource configuration information is carried in a first system information block.

18. A communication apparatus, wherein the apparatus comprises a transceiver unit, wherein
the transceiver unit is configured to receive a first system information block, wherein the first system information block comprises first resource configuration information; and
the transceiver unit is further configured to: when a size of a first frequency domain resource is less than or equal to a channel bandwidth supported by the communication apparatus, wherein the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the communication apparatus, send a system information request based on the first resource configuration information by using the Msg 1; or
the transceiver unit is further configured to: when the size of the first frequency domain resource is greater than the channel bandwidth supported by the communication apparatus, wherein the first frequency domain resource is a frequency domain resource that is configured by using the first resource configuration information and that is used to request other system information by using the Msg 1, or when the bandwidth of the first initial bandwidth part is greater than the channel bandwidth supported by the communication apparatus, send the system information request by using a third message Msg 3.

19. The apparatus according to claim 17 or 18, wherein the first system information block does not comprise second resource configuration information, and the second resource configuration information is resource configuration information used by the communication apparatus to request other system information by using the Msg 1.

20. The apparatus according to any one of claims 15 to 19, wherein the first resource configuration information is resource configuration information used by a second terminal to request other system information by using the Msg 1, wherein
the second terminal is a broadband terminal.

21. The apparatus according to any one of claims 15 to 20, wherein the communication apparatus is a narrowband terminal.

22. A communication apparatus, wherein the apparatus comprises a transceiver unit, wherein
the transceiver unit is configured to send first indication information; and
the transceiver unit is further configured to receive a system information request from a first terminal, wherein
the first indication information indicates to send the system information request based on first resource configuration information by using a first message Msg 1, and the first resource configuration information is resource configuration information for requesting other system information by using the Msg 1; or
the first indication information indicates to send the system information request by using a third message Msg 3.

23. A communication apparatus, wherein the apparatus comprises a processing unit and a transceiver unit, wherein
the processing unit is configured to determine a first rule; and
the transceiver unit is further configured to receive a system information request from a first terminal according to the first rule, wherein
the first rule is receiving the system information request based on first resource configuration information by using a first message Msg 1, and the first resource configuration information is resource configuration information for requesting other system information by using the Msg 1; or
the first rule is receiving the system information request by using a third message Msg 3.

24. The apparatus according to claim 22 or 23, wherein the first resource configuration information is carried in a first system information block.

25. A communication apparatus, wherein the apparatus comprises a transceiver unit, wherein
the transceiver unit is configured to send a first system information block, wherein the first system information block comprises first resource configuration information; and
the transceiver unit is further configured to: when a size of a first frequency domain resource is less than or equal to a channel bandwidth supported by a first terminal, wherein the first frequency domain resource is a frequency domain resource that is configured by using the first resource configuration information and that is used to request other system information by using a first message Msg 1, or when a bandwidth of a first initial bandwidth part is less than or equal to the channel bandwidth supported by the first terminal, receive a system information request sent by the first terminal based on the first resource configuration information by using the Msg 1; or
the transceiver unit is further configured to: when the size of the first frequency domain resource is greater than the channel bandwidth supported by the first terminal, wherein the first frequency domain resource is a frequency domain resource that is configured by using the first resource configuration information and that is used to request other system information by using the Msg 1, or when the bandwidth of the first initial bandwidth part is greater than the channel bandwidth supported by the first terminal, receive the system information request sent by the first terminal by using a third message Msg 3.

26. The apparatus according to claim 24 or 25, wherein the first system information block does not comprise second resource configuration information, and the second resource configuration information is resource configuration information used by the first terminal to request other system information by using the Msg 1.

27. The apparatus according to any one of claims 22 to 26, wherein the first resource configuration information is resource configuration information used by a second terminal to request other system information by using the Msg 1, wherein
the second terminal is a broadband terminal.

28. The apparatus according to any one of claims 22 to 27, wherein the first terminal is a narrowband terminal.

29. A communication system, comprising a first communication apparatus and a second communication apparatus, wherein the first communication apparatus is configured to perform the method according to any one of claims 1 to 7, and the second communication apparatus is configured to perform the method according to any one of claims 8 to 14.

30. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 14 by using a logic circuit or by executing code instructions.

31. A computer-readable storage medium, wherein the storage medium stores a computer program or instructions, and when the computer program or the instructions are executed by a communication apparatus, the method according to any one of claims 1 to 14 is implemented.

32. A computer program product, wherein when the computer program product is executed on a computing device, the method according to any one of claims 1 to 14 is performed.
